# FASCICULE DE BREVET EUROPEEN

(11) **EP 0 515 273 B1**
(45) Date de publication et mention de la délivrance du brevet: **04.01.1995**
(21) Numéro de dépôt: 92401386.5
(22) Date de dépôt: 21.05.1992
(51) Int. Cl.: G01J 3/51

(54) **Dispositif optique pour la reconnaissance de teintes de vitres**
Optische Vorrichtung zur Erkennung von Farbtönen an Fenstern
Optical device for the recognition of window tints

(30) Priorité: 23.05.1991 FR 9106673
(43) Date de publication de la demande: 25.11.1992
(73) Titulaire: AUTOMOBILES PEUGEOT, 75116 Paris (FR); AUTOMOBILES CITROEN, 92200 Neuilly-sur-Seine (FR)
(72) Inventeur: Oulamara, Aomer, F-94250 Gentilly (FR)
(74) Mandataire: Boivin, Claude

(56) Documents cités:
- WO-A-81/01466
- WO-A-90/04155
- FR-A- 2 319 894
- US-A- 3 867 039
- US-A- 3 998 555

## Description

Dans l'industrie automobile, pour effectuer le montage d'une vitre sur une ligne de montage robotisée, le robot saisit une vitre sur un support. Un dépalettiseur prélève les vitres sur un convoyeur pour alimenter le robot. Selon les options du client, la vitre sur le convoyeur peut être teintée ou non. Il faut donc que le dépalettiseur soumette la vitre à un contrôle et, selon les cas, la dépose ou non sur le support du robot.

L'invention a pour objet un dispositif optique de reconnaissance de teintes de vitres conçu à cet effet.

Les documents WO-A-90/ 04155 et US-A-3,867,039 décrivent des appareils de reconnaissance de couleurs comportant des filtres et des photodétecteurs. Le premier comprend au moins deux circuits optiques photodétecteurs munis chacun d'un filtre et connectés, par l'intermédiaire d'un amplificateur, à un amplificateur différentiel qui donne un signal représentatif de la présence d'une couleur donnée dans le faisceau lumineux reçu par les filtres; le second comprend une source lumineuse éclairant un produit et un miroir semi-réfléchissant séparant le faisceau lumineux réfléchi par l'objet en deux faisceaux qui sont recueillis sur des capteurs après passage à travers des filtres de longueurs d'ondes différentes, l'appareil calculant ensuite le rapport des intensités des deux faisceaux obtenus.

Le dispositif selon l'invention est du type décrit dans le préambule de la revendication 1 et est caractérisé en ce qu'un premier circuit optique photodétecteur reçoit directement la lumière traversant la vitre à contrôler, son amplificateur fournissant ainsi un signal de référence, et en ce qu'un autre circuit photodétecteur est muni d'un filtre optique passe-bande centré sur une longueur d'onde décalée par rapport à celle de la teinte à reconnaître, son amplificateur fournissant un signal de couleur, le diviseur fournissant ainsi un signal de sortie fonction du rapport du signal de couleur avec le signal de référence.

La longueur d'onde centrale du filtre-bande peut, par exemple correspondre à celle de la teinte complémentaire de la teinte à reconnaître. Quand la vitre présente cette teinte, la tension du signal de sortie de l'amplificateur associé au photodétecteur devant lequel se trouve le filtre a une faible valeur, différente de celle de la tension du signal de référence; au contraire si la vitre est incolore, le signal de sortie a la même tension que le signal de référence. L'emploi d'un diviseur rend le dispositif indépendant des variations d'éclairement, ce qui ne serait pas le cas si on opérait par différence.

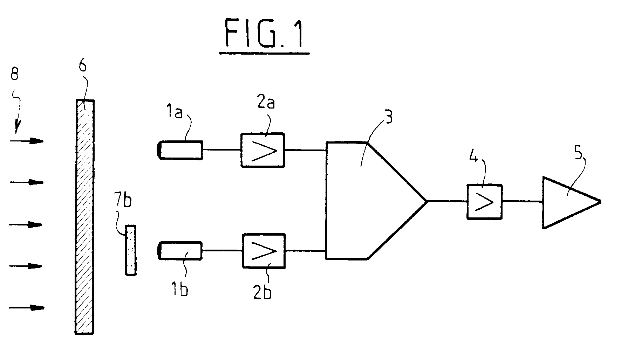

On a décrit ci-après, à titre d'exemples non limitatifs, divers modes de réalisation du dispositif selon l'invention, avec référence aux dessins annexés dans lesquels les Figures 1 à 3 sont des schémas de ces modes de réalisation.

Tel qu'il est représenté à la Figure 1, le dispositif de reconnaissance de teinte selon l'invention comprend deux circuits optiques formés chacun d'un photodétecteur 1a ou 1b et d'un amplificateur 2a ou 2b.

Les deux amplificateurs sont connectés aux entrées d'un circuit diviseur analogique 3 dont la sortie amplifiée par un amplificateur 4 commande une bascule 5.

Ce dispositif est destiné à reconnaître si une vitre 6 est teintée ou non. Devant le photodétecteur 1b est placé un filtre passe-bande 7b approximativement centré sur la teinte complémentaire de la teinte éventuelle de la vitre 6; il est par exemple centré sur une teinte rouge si la vitre 6 peut être teintée verte.

Pour utiliser le dispositif il suffit d'interposer la vitre 6 à examiner entre lui et une source de lumière blanche 8. Le diviseur 3 fournit un signal dont la tension est proportionnelle au rapport des signaux d'entrée amplifiés. Lorsque la vitre 6 n'est pas teintée, le filtre 7b n'absorbe qu'une fraction réduite de la lumière, les deux signaux d'entrée du diviseur sont approximativement égaux et le résultat de la division est proche de un. Au contraire, si la vitre est teintée, le filtre 7b ne laisse pratiquement pas passer de lumière et le rapport des tensions des deux signaux d'entrée est élevé, en tout cas supérieur à 1. Il est facile de régler le dispositif, en adaptant les gains des amplificateurs 2a et 2b ainsi que le zéro du diviseur 3, pour que la bascule 5 fournisse le signal 0 si la vitre n'est pas teintée et 1 si elle l'est, ou inversement.

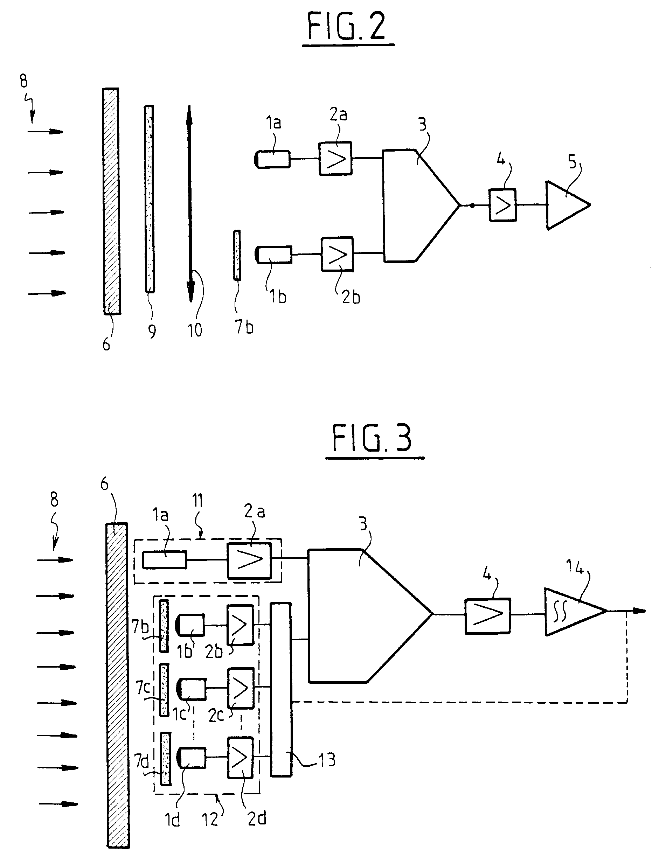

Le mode de réalisation de la Figure 2 est destiné à être utilisé avec l'éclairage ambiant. Devant les photodétecteurs 1a et 1b et le filtre 7b sont placés un filtre atténuateur 9 de densité neutre qui ajuste la puissance lumineuse de façon qu'elle se situe dans la zone de sensibilité et de linéarité des photodétecteurs 1a et 1b, et une lentille 10 qui forme l'image de la vitre 6 dans le plan des photodétecteurs 1a et 1b.

La Figure 3 montre un mode de réalisation convenant lorsque le nombre de teintes à reconnaître est supérieur à deux. La lumière traversant la vitre 6 est détectée par deux blocs:
- un premier bloc 11, formé par un photodétecteur 1a et un amplificateur 2a, fournit un signal de référence qui est injecté dans le diviseur 3,
- un second bloc 12 formé d'un ensemble de triplets filtre optique 7b, 7c, 7d, photodétecteur 1b, 1c, 1d, et amplificateur 2b, 2c, 2d. Chacun des filtres 7b, 7c, 7d, est centré sur la longueur d'onde approximativement complémentaire de chacune des teintes de vitres à reconnaître. Les sorties des amplificateurs 2b, 2c et 2d sont dirigées successivement sur le diviseur 3 par un multiplexeur 13. La sortie du diviseur 3 est dirigée vers un trigger 14 activé par le multiplexeur 13.
   La réponse de ce dernier permet de connaître la teinte de la vitre 6; par exemple si cette réponse est 0 pour le keme détecteur et 1 pour les autres, la
   a la teinte correspondante à celle du filtre 7k.

On voit de la description qui précède que le dispositif selon l'invention est adaptable à toute teinte de vitre, fonctionne sans contact et en temps réel, est insensible aux variations d'éclairage ambiant, ne nécessite pas de sources particulières de fonctionnement, est calibrable sur site et peut reconnaître un nombre quelconque de teintes.

## Revendications

1. Dispositif optique pour la reconnaissance de la teinte d'une vitre qui comporte au moins deux circuits optiques photodétecteurs (1a ou 11, 1b, 1c ou 1d) dont l'un est muni d'un filtre optique (7b, 7c ou 7d) et qui sont connectés chacun à un amplificateur (2a, 2b, 2c ou 2d), un diviseur (3) dont les entrées sont connectées aux sorties des amplificateurs et des moyens de traitement (4-5) du signal de sortie de ce diviseur,
caractérisé en ce qu'un premier circuit optique photodétecteur (1a ou 11) reçoit directement la lumière traversant la vitre à contrôler, son amplificateur fournissant ainsi un signal de référence, et en ce qu'un autre circuit photodétecteur (1b, 1c ou 1d) est muni d'un filtre optique passe-bande (7b, 7c ou 7d) centré sur une longueur d'onde décalée par rapport à celle de la teinte à reconnaître, son amplificateur fournissant un signal de couleur, le diviseur fournissant ainsi un signal de sortie fonction du rapport du signal de couleur avec le signal de référence.

2. Dispositif selon la revendication 1,
caractérisé en ce que la longueur d'onde centrale du filtre passe-bande (7) est approximativement celle de la teinte complémentaire de la teinte à reconnaître.

3. Dispositif selon la revendication 1 ou 2,
caractérisé en ce qu'il comporte une série (12) de circuits optiques munis chacun d'un filtre (7b, 7c ou 7d) centrés sur une longueur d'onde décalée par rapport à celle des teintes à contrôler, et un multiplexeur (13) interposé entre le diviseur et les circuits optiques munis de filtres.

4. Dispositif selon la revendication 3,
caractérisé en ce que les moyens de traitement (4-14) des signaux émis par le diviseur (3) sont actionnés par le multiplexeur (13).

5. Dispositif selon l'une des revendications 1 à 4,
caractérisé en ce qu'il comprend des moyens optiques (10) pour former l'image de la vitre (6) dans le plan du ou des photodétecteurs (1a, 1b, 1c et 1d).

6. Dispositif selon l'une des revendications 1 à 5,
caractérisé en ce qu'il comprend un filtre atténuateur (9) de densité neutre devant le ou les filtres (7b, 7c ou 7d).

## Claims

1. Optical device for recognising the tint of a window pane which comprises at least two photodetector optical circuits (1a or 11, 1b, 1c or 1d), one of said circuits being provided with an optical filter (7b, 7c or 7d), each circuit being connected to an amplifier (2a, 2b, 2c or 2d), a divider (3) whose inputs are connected to the outputs of the amplifiers and means (4-5) for processing the output signal of this divider,
wherein a first photodetector optical circuit (1a or 11) directly receives the light traversing the window pane to be inspected, its amplifier thus providing a reference signal, and wherein a further photodetector circuit (1b, 1c or 1d) is provided with a passband optical filter (7b, 7c or 7d) centered on a wavelength offset with respect to that of the tint to be recognised, its amplifier providing a colour signal, the divider thus providing an output signal according to the ratio of the colour signal with the reference signal.

2. Device according to claim 1,
wherein the central wavelength of the passband filter (7) is approximately that of the complementary tint of the tint to be recognised.

3. Device according to claim 1 or 2,
wherein it comprises a set (12) of optical circuits, each provided with a filter (7b, 7c or 7d) centered on a wavelength offset with respect to that of the tints to be inspected, and a multiplexer (13) inserted between the divider and the optical circuits provided with filters.

4. Device according to claim 3,
wherein the means (4-14) for processing the signals emitted by the divider (3) are activated by the multiplexer (13).

5. Device according to any one of claims 1 to 4,
wherein it includes optical means (10) to form the image of the window pane (6) inside the plane of the photodetector(s) (1a, 1b, 1c and 1d).

6. Device according to any one of claims 1 to 5,
wherein it includes a neutral density attenuator filter (9) in front of the filter(s) (7b, 7c or 7d).

## Patentansprüche

1. Optische Vorrichtung zur Erkennung des Farbtons einer Fensterscheibe, welche mindestens zwei optische, mit Fotoempfängern versehene Zweige (1a oder 11, 1b, 1c oder 1d) aufweist, von denen einer mit einem optischen Filter (7b, 7c oder 7d) versehen ist und die jeweils mit einem Verstärker (2a, 2b, 2c oder 2d), einem Teller (3), dessen Eingänge an die Ausgänge der Verstärker angeschlossen sind, und Mitteln (4-5) zur Verarbeitung des Ausgangssignals dieses Teilers verbunden sind, dadurch gekennzeichnet, daß einem ersten optischen mit einem Fotoempfänger versehenen Zweig (1a oder 11) direkt das die zu prüfende Fensterscheibe durchsetzende Licht zugeführt wird, so daß sein Verstärker ein Bezugssignal abgibt und daß ein anderer mit einem Fotoempfänger versehener Zweig (1b, 1c oder 1d) mit einem optischen Bandpaßfilter (7b, 7c oder 7d) versehen ist, das auf eine Wellenlänge zentriert ist, welche gegenüber derjenigen des zu erkennenden Farbtons verschoben ist, so daß der Teiler ein Ausgangssignal abgibt, welches vom Verhältnis des Farbsignals zum Bezugssignal abhängig ist.

2. Vorrichtung nach Anspruch 1, dadurch gekennzeichnet, daß die Mittenwellenlänge des Bandpaßfilters (7) angenähert der Wellenlänge des zum zu erkennenden Farbton komplementären Farbtons entspricht.

3. Vorrichtung nach Anspruch 1 oder 2 dadurch gekennzeichnet, daß sie eine Reihe (12) von optischen Zweigen aufweist, die jeweils mit Filtern (7b, 7c oder 7d) versehen sind, die auf eine Wellenlänge zentriert sind, welche gegenüber derjenigen der zu prüfenden Farbtöne verschoben ist, und zwischen den Teiler und die mit Filtern versehenen optischen Zweige ein Multiplexer (13) eingeschaltet ist.

4. Vorrichtung nach Anspruch 3, dadurch gekennzeichnet, daß die Mittel zur Verarbeitung (4-14) der vom Teiler (3) abgegebenen Signale durch den Multiplexer (13) angesteuert werden.

5. Vorrichtung nach einem der Ansprüche 1 bis 4, dadurch gekennzeichnet, daß sie optische Mittel (10) zur Erzeugung eines Bildes der Fensterscheibe (6) in der Ebene des oder der Fotoempfänger (1a, 1b, 1c und 1d) aufweist.

6. Vorrichtung nach einem der Ansprüche 1 bis 5, dadurch gekennzeichnet, daß sie vor dem Filter, bzw. den Filtern (7b, 7c oder 7d) ein Dämpfungsfilter (9) mit neutraler Dichte aufweist.
